# EUROPEAN PATENT SPECIFICATION

(11) **EP 3 386 156 B1**
(45) Date of publication and mention of the grant of the patent: **13.07.2022**
(21) Application number: 16869711.8
(22) Date of filing: 11.08.2016
(51) Int. Cl.: H04L 45/28, H04L 41/06, H04L 45/02, H04L 45/00

(54) **FAILURE RECOVERY METHOD, DEVICE AND STORAGE MEDIUM**
AUSFALLWIEDERHERSTELLUNGSVERFAHREN, -VORRICHTUNG UND SPEICHERMEDIUM
PROCÉDÉ, DISPOSITIF ET SUPPORT DE STOCKAGE DE REPRISE APRÈS DÉFAILLANCE

(30) Priority: 30.11.2015 CN 201510863471
(43) Date of publication of application: 10.10.2018
(73) Proprietor: ZTE Corporation, Shenzhen, Guangdong 518057 (CN)
(72) Inventor: SUN, Desheng, Shenzhen Guangdong 518057 (CN); ZHAO, Fuchuan, Shenzhen Guangdong 518057 (CN); BO, Kaitao, Shenzhen Guangdong 518057 (CN)
(74) Representative: Iannone, Carlo Luigi
(86) International application number: PCT/CN2016/094675
(87) International publication number: WO 2017/092400

(56) References cited:
- WO-A1-2015/072709
- CN-A- 102 946 325
- CN-A- 103 428 031
- CN-A- 104 184 608
- CN-A- 104 426 731
- CN-A- 104 753 828
- US-A1- 2015 172 101
- US-A1- 2015 326 426

## Description

### TECHNICAL FIELD

The disclosure relates to, but not limited to, the field of communications, and particularly to a failure recovery method and a device, a controller and a software defined network.

### BACKGROUND

In recent years, the Software Defined Network (SDN) is a research focus in the field of communications. The SDN related standard recommendations proposed by global and domestic standard organizations such as Open Networking Forum (ONF), International Telecommunications Union-Telecommunications standardization sector (ITU-T), China Communications Standards Association (CCSA) etc. focus on the decoupling between a controller and a forwarder. Interfaces between controllers, and Interfaces between a controller and a forwarding plane are standardized to facilitate joint networking between a controller and a forwarder provided by different manufacturers.

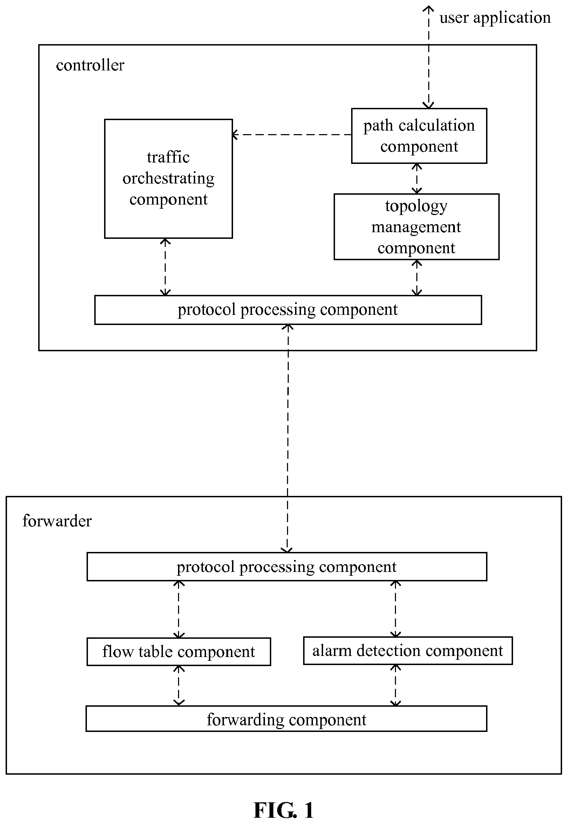

FIG. 1 is an architecture diagram of an SDN controller and a forwarder in the related art. As shown in FIG. 1, the controller generally includes a path management component, a traffic orchestrating component, a topology management component, and a protocol adaptation component (i.e., a protocol processing component). The forwarder generally includes a flow table component, a fault detection component, a forwarding component, and a protocol adaptation component (i.e., a protocol processing component).

After the network of a transport network (a network utilizing the transport technology including Ethernet, Multi-Protocol Label Switching (MPLS), MPLS-TP, Optical Transport Network (OTN), and Wavelength Division Multiplexing (WDM), etc.) fails (such as a link interrupts, a failure in a component or a power supply unit etc.), it is an important function for the transport network to create a new path to restore the traffic.

After the transport network evolves to the SDN, as shown in FIG. 1, when a failure is detected by an alarm detection component of a forwarder adjacent to the failure, an alarm is transmitted upwardly to a controller through an SDN protocol processing component. The protocol processing component is mainly responsible for packaging content information into an SDN protocol packet, or responsible for parsing the content information from the SDN protocol packet. After received the alarm, the protocol processing component of the controller forwards it to a topology management component. The topology management component is mainly responsible for managing network resources of the SDN, including links, node devices, traffic paths, etc. The topology management component updates the network topology and notifies a path management component of the updated network topology. The path management component creates a new path for a path affected by the failure, generates the table entry information through a traffic orchestrating component and transmits the generated table entry information to each forwarder related to the new path through a protocol processing component. The path management component is mainly responsible for adding, changing, and deleting a path etc. The traffic orchestrating component mainly generates the flow table, the group table entries etc. required for the forwarding flow according to the forwarding hardware requirements based on the logical path. After receiving the configuration of the table entry, the protocol processing component of the forwarder forwards it to a flow table component that invokes the relevant interface to write the configuration of the table entry into the forwarding component. Therefore, the new path is created successfully and the traffic is recovered.

In general, a period of time from the time when a traffic is interrupted due to a network failure to the time when a new path is created and the traffic is recovered is required to be as short as possible, so as to reduce the impact on the user function and improve the user experience. For example, in an Automatically Switched Optical Network (ASON), related test standard specifications have required that the recovery time is within one second or several seconds. In addition, it may take too much time to orchestrate the traffic path, i.e. to generate the forwarding information such as the flow table and the group table etc. required for the forwarding flow according to the forwarding hardware requirements based on the logical path outputted by the path management component, thereby the SDN takes a relatively long time to recover from a failure. Further relevant technologies are also known from WO 2015/072709 A1 & US 2016/294734 A1 which relate to method for operating controller and switch for relieving network failure from SDN, and controller and switch therefor, and from US 2015/326426 A1 (LUO MIN [US] ET AL) 12 November 2015 (2015-11-12) which relates to partial software defined network switch replacement in IP networks.

For the problem that an SDN takes a relatively long time to recover from a failure in the related art, no effective solution has been proposed.

### SUMMARY

The above problem is solved by a failure recovery method according to claim 1, a failure recovery device according to claim 4, and a storage medium according to claim 7.

### BRIEF DESCRIPTION OF DRAWINGS

FIG. 1 is an architecture diagram of an SDN controller and a forwarder in the related art;
FIG. 2 is a flowchart of a failure recovery method according to the present disclosure;
FIG. 3 is another flowchart of a failure recovery method according to the present disclosure;
FIG. 4 is yet another flowchart of a failure recovery method according to the present disclosure;
FIG.5 is a structural diagram of a controller according to the present disclosure;
FIG. 6 is another structural diagram of a controller according to the present disclosure;
FIG. 7 is yet another structural diagram of a controller according to the present disclosure;
FIG. 8 is a structural diagram of a software defined network (SDN) according to the present disclosure;
FIG. 9 is a structural diagram of a failure recovery device according to the present disclosure;
FIG. 10 is another structural diagram of a failure recovery device according to the present disclosure;
FIG. 11 is a yet another structural diagram of a failure recovery device according to the present disclosure;
FIG. 12 is a schematic architecture diagram of an SDN according to the present disclosure;
FIG. 13 is a schematic flowchart of the method for maintaining the validity of the information stored in a table entry repository component according to the present disclosure;
FIG. 14 is schematic diagram of a failure recovery scenario according to the present disclosure; and
FIG. 15 is a flowchart for performing a quick recovery according to a network failure according to the present disclosure.

### DETAILED DESCRIPTION

The present disclosure will now be described with reference to the accompanying drawings accompany with embodiments. It should be noted that the embodiments in the present application and features in the embodiments can be combined with each other without conflict.

It should be noted that terms "first", "second", and the like in the description, claims and the foregoing drawings of the present disclosure are used to distinguish similar objects and do not necessarily describe a specific sequence or order.

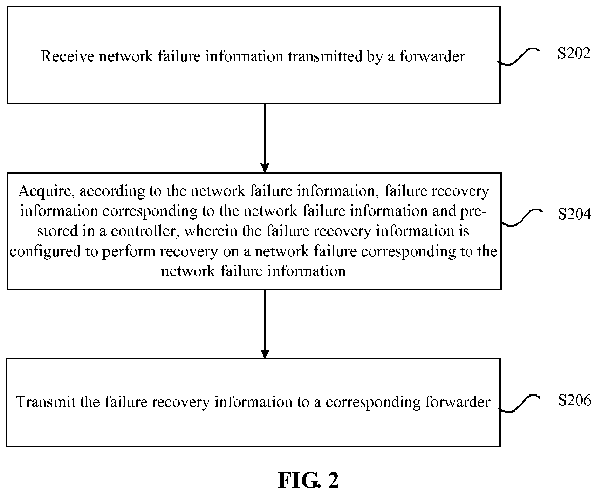

In an embodiment, a failure recovery method is provided, FIG. 2 is a flowchart of a failure recovery method according to an embodiment of the present disclosure, as shown in FIG. 2, the method includes the following operations:
At S202, network failure information transmitted by a forwarder is received;
At S204, failure recovery information corresponding to the network failure information and pre-stored in a controller is acquired according to the network failure information, herein the failure recovery information is configured to perform recovery on a network failure corresponding to the network failure information;
At S206, the failure recovery information is transmitted to each corresponding forwarder.

Through the above operations, after the network failure information transmitted upwardly by the forwarder is received, the failure recovery information pre-stored and corresponding to the network failure information is directly acquired from the controller, and then is transmitted downwardly to each forwarder. Compared with the related art, the failure recovery information is pre-stored in the controller, instead of generating the failure recovery information when the network failure is received. When receiving the network failure information, the controller obtains the failure recovery information from itself directly. Therefore, the problem that an SDN takes a long time to recover from a failure in the related art is addressed, thereby the recovery time is saved and the recovery efficiency is improved.

It should be noted that the above method may be applied to an SDN. The SDN may include the network adopting the related transport technology including Ethernet, MPLS, MPLS-TP, OTN, WDM, etc. and may also include the transport network adopting similar layer network transport technology. The above network failure information may include link failure information. The link failure information may be alarm information about a link failure and may also be notification information about the link failure etc., but it is not limited thereto. The link failure may be a single failure, for example, there is only one link failure in the network, or be multiple failures, for example, there are multiple link failures in the network. It should be noted that the above-mentioned link failure may be caused by an interruption of the link itself or a power failure of the forwarder, but it is not limited thereto.

In an embodiment of the present disclosure, the above-mentioned failure recovery information may include a forwarding table entry of each forwarder corresponding to a reserved traffic path, herein the reserved traffic path is a reserved traffic path of a traffic path affected by the network failure. It should be noted that the forwarding table entry may include at least one of flow table or group table information. That is to say, the forwarding table entry information corresponding to the reserved traffic path corresponding to each failure is pre-stored in the controller. When a network failure is received, such as a link failure is received, a forwarding table entry of each forwarder corresponding to a reserved traffic path corresponding to the network failure is retrieved through the network failure information, and then is transmitted downwardly to each corresponded forwarder, thereby the failure recovery is completed.

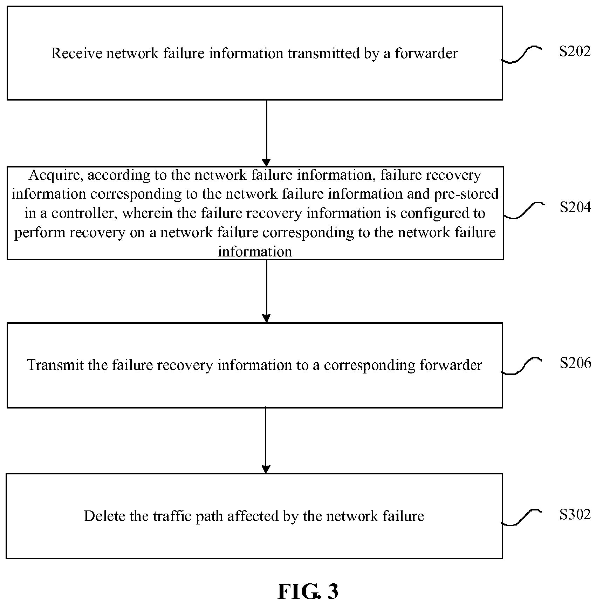

FIG. 3 is another flowchart of a failure recovery method according to an embodiment of the present disclosure, as shown in FIG. 3, after S206, the above-mentioned method may also include:
At S302, the traffic path affected by the network failure is deleted.

Through the operation, the original traffic path affected by the above-mentioned network failure information is deleted, so that the number of the traffic path may be decreased and information of the reserved path which needs to be saved in the controller may be decreased, thereby the storage space may be saved.

It should be noted that S302 may also be performed after S204.

In addition, the above-mentioned S302 may not be performed, that is to say, the traffic path affected by the network failure may also be retained. Since the traffic path affected by the network failure may be an optimal traffic path, after the optimal traffic path is retained, the optimal traffic path instead of the reserved traffic path of the traffic path may be used again after the network failure is eliminated. It may be determined whether to delete or to retain the traffic path affected by the network failure according to the actual needs of the user, but it is not limited thereto.

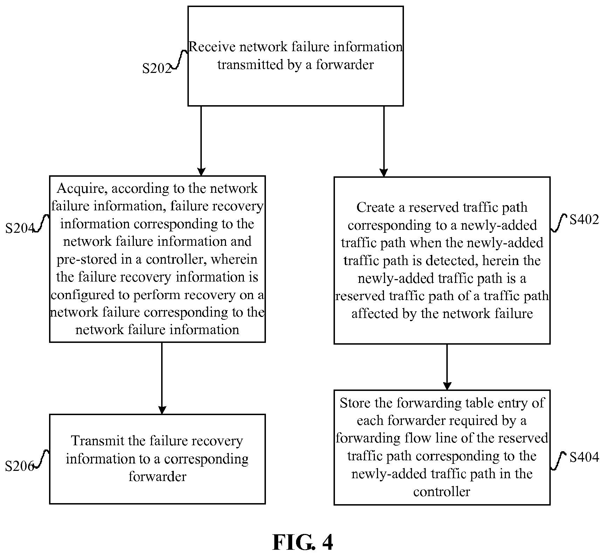

In an embodiment of the present disclosure, FIG. 4 is yet another flowchart of a failure recovery method according to an embodiment of the present disclosure, as shown in FIG. 4, after S202, the above-mentioned method may also include:
At S402, a reserved traffic path corresponding to a newly-added traffic path is created when the newly-added traffic path is detected, herein the newly-added traffic path is a reserved traffic path of a traffic path affected by the network failure;
At S404, the forwarding table entry of each forwarder required by a forwarding flow line of the reserved traffic path corresponding to the newly-added traffic path is stored in the controller.

It should be noted that one or more forwarding table entries may form one forwarding flow line, one reserved traffic path may correspond to one or more forwarding flow lines.

Through the above operations, forwarding table entry information in the controller can be maintained dramatically by adding the forwarding table entry of each forwarder in reserved traffic path corresponding to a newly-added traffic path into the controller when the newly-added traffic path is detected, so that the traffic can be recovered quickly when the newly-added traffic path fails.

For example, in the SDN which includes forwarders A, B, C and D and a controller, the current link includes A-B, A-C, A-D, B-C, B-D, C-D, when the link A-B whose reserved traffic path is A-C-B fails, the controller may retrieve forwarding table entry information of A, C and B corresponding to A-C-B in the controller. At this time, there is a new traffic path A-C-B, then a reserved traffic path of A-C-B (assuming A-D-C-B) should be created in the controller, and the link A-D-C-B and forwarding table entries of A, D, C, B corresponding to A-D-C-B are stored in the controller, so that the traffic can be recovered quickly when the next failure occurs (such as A-C fails or both of A-C and A-B fail).

From the description of the above embodiments, those skilled in the art can clearly understand that the method according to the above embodiments can be implemented by means of software plus a necessary general hardware platform. Of course, it can also be implemented by means of hardware. In many cases, the former is better. Based on this understanding, the solution of the present disclosure, in essence or the part that contributes to the prior art, can be embodied in form of a software product. The computer software product can be stored in a storage medium (such as a ROM/RAM, a magnetic disk, an optical disc) and includes instructions which causes a terminal device (which may be a mobile phone, a computer, a server, or a network device, etc.) to perform the methods described the embodiment of the present disclosure.

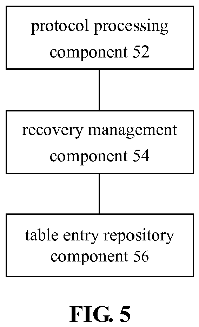

In an embodiment, a controller is provided. The controller is applied to an SDN. FIG. 5 is a structural diagram of the controller according to an embodiment of the present disclosure, as shown in FIG. 5, the controller includes: a protocol processing component 52, a recovery management component 54 and a table entry repository component 56.

The protocol processing component 52 is configured to transmit network failure information received from a forwarder in the SDN to the recovery management component.

The recovery management component 54 is connected to the protocol processing component 52 and the table entry repository component 56 and configured to retrieve failure recovery information corresponding to the network failure information from the table entry repository component 56 according to the network failure information transmitted by the protocol processing component 52, and to transmit the failure recovery information to the forwarder through the protocol processing component, herein the network failure information, the failure recovery information and correspondences between the network failure information and the failure recovery information are stored in the entry repository component 56.

By pre-storing the network failure information, the failure recovery information and correspondences between the network failure information and the failure recovery information in the entry repository component 56, the controller may acquire the failure recovery information corresponding to the network failure information directly from the table entry repository component 56, instead of generating the recovery management component immediately. The problem that an SDN takes a long time to recover from a failure in the related art is addressed, thereby the recovery time is saved and the recovery efficiency is increased.

It should be noted that the SDN may include a network adopting the related transport technology such as Ethernet, MPLS, MPLS-TP, OTN, WDM, etc. and may also include a transport network adopting similar layer network transport technology. The network failure information may include link failure information. The link failure information may be alarm information about a link failure and may also be notification information about the link failure etc., but it is not limited thereto. The link failure may be a single failure, for example, there is only one link failure in the network, or multiple failures, for example, there are multiple link failures in the network. It should be noted that the link failure may be caused by an interruption of the link itself or a power failure of the forwarder, but it is not limited thereto.

In an embodiment of the present disclosure, the failure recovery information may include a forwarding table entry of each forwarder corresponding to a preserved traffic path, herein the reserved traffic path is a reserved traffic path of a traffic path affected by the network failure. It should be noted that the forwarding table entry may include at least one of the flow table information or the group table information.

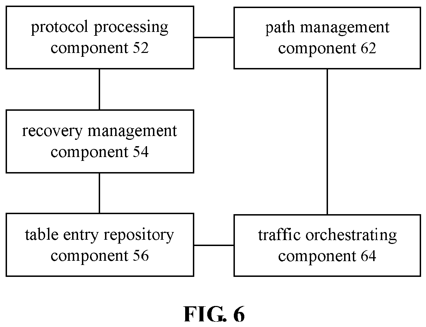

FIG. 6 is another structural diagram of a controller according to an embodiment of the present disclosure; as shown in FIG. 6, the controller may also include:
a path management component 62 configured to simulate various failures occurred in an SDN and calculate the reserved traffic path corresponding to the traffic path for the traffic path affected by the failure;
a traffic orchestrating component 64 connected to the path management component 62 and configured to generate the failure recovery information according to the forwarding flow requirement of the reserved traffic path and store the failure and the failure recovery information in the table entry repository component 56, herein the failure recovery information may include the forwarding table entry of each forwarder associated with the reserved traffic path.

Through the path management component 62 and the traffic orchestrating component 64, the failure can be simulated in advance to calculate the reserved traffic path of the traffic path, the simulated failure and the reserved traffic path information (i.e. the failure recovery information) corresponding to the failure are stored in the table entry repository component 56, so that the failure recovery information corresponding to the failure can be acquired directly when the failure occurs, without calculating the failure recovery information, therefore, the recovery time is saved.

It should be noted that the path management component 62 is also configured to delete the traffic path affected by the network failure. Therefore, the storage space in the controller is saved.

In addition, the path management component 62 may also be configured to retain the traffic path affected by the network failure. For example, the traffic path affected by the network failure may be an optimal traffic path. Since the optimal traffic path is retained by path management component 62, the optimal traffic path instead of the reserved traffic path of the traffic path may be used again after the network failure is eliminated.

It should be noted that the path management component 62 may determine whether to delete or to retain the traffic path affected by the network failure according to the actual needs of the user, but it is not limited thereto.

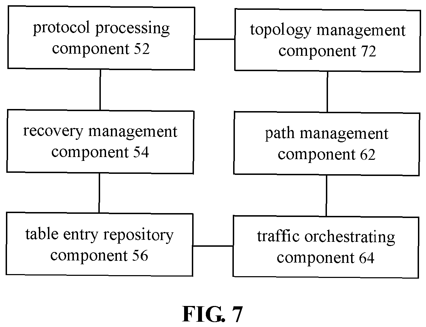

FIG. 7 is yet another structural diagram of a controller according to an embodiment of the present disclosure; as shown in FIG. 7, the controller may also include:
a topology management component 72 configured to receive network failure information transmitted by the protocol processing component and add a newly-added traffic path into network resource information of the SDN when the newly-added traffic path is detected, herein the newly-added traffic path is a reserved traffic path of a traffic path affected by the network failure.

By adding a newly-added traffic path into network resource information of the SDN via the topology management component 72 when the newly-added traffic path is detected, and adding the forwarding table entry of each forwarder in the reserved traffic path corresponding to the newly-added traffic path into table entry repository component 56 via the traffic orchestrating component 64, the table entry repository component 56 can be maintained dramatically, so that the traffic can be recovered quickly after the newly-added traffic path fails.

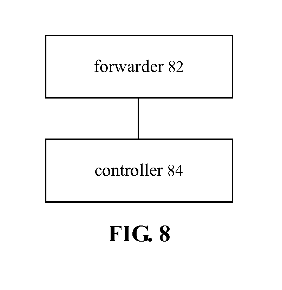

In an embodiment, an SDN is provided. FIG. 8 is a schematic structural diagram of the SDN according to an embodiment of the present invention. As shown in FIG. 8, the SDN includes: a forwarder 82 and a controller as shown in any one of FIG. 5 to 7, the explanation of the controller is as same as that in the embodiments as shown in FIG. 5 to 7 and is not repeated herein.

It should be noted that the forwarder may be one or more, but it is not limited thereto.

Based on the improvement of the controller, i.e., by pre-storing network failure information, failure recovery information and correspondences between the network failure information and the failure recovery information in a table entry repository component 56, the SDN may acquire failure recovery information corresponding to a network failure information directly from the table entry repository component 56, instead of generating the failure recovery information immediately. The problem that the SDN takes a long time to recover from a failure in the related art is addressed, thereby the recovery time is saved and the recovery efficiency is increased.

In the embodiment, a failure recovery device is provided, the failure recovery device is configured to implement above-mentioned embodiments and preferred embodiments, the explanation which have been described will not be described again. As used below, the term "module" is a combination of software and/or hardware which may implement predetermined function. Although the device described in the below embodiment is preferably implemented in software, it is also possible and conceived that the device may be implemented by hardware or a combination of software and hardware.

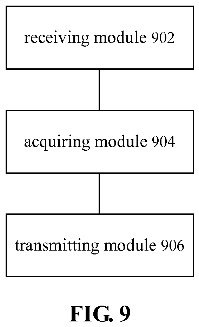

FIG. 9 is a structural diagram of a failure recovery device according to an embodiment of the present disclosure, the device is applied to an SDN, as shown in FIG. 9, the device includes:
a receiving module 902 configured to receive network failure information transmitted by a forwarder;
an acquiring module 904 connected to the receiving module 902 and configured to acquire failure recovery information corresponding to the network failure information and pre-stored in a controller according to the network failure information, herein the failure recovery information is configured to perform recovery on a network failure corresponding to the network failure information;
a transmitting module 906 connected to the acquiring module 904 and configured to transmit the failure recovery information to each forwarder corresponding to the failure recovery information.

Through the above-mentioned device, after network failure information transmitted upwardly by a forwarder is received, the failure recovery information pre-stored and corresponding to the network failure information is directly acquired from a controller, and then transmitted downwardly to each forwarder. The device pre-stores the failure recovery information in the controller and directly acquires the failure recovery information from the controller when a network failure is received, without generating the failure recovery information immediately. Through acquiring the failure recovery information from the controller directly when network failure information is received, the problem that the SDN takes a long time to recover from a failure in the related art is addressed, therefore the recovery time is saved and the recovery efficiency is improved.

It should be noted that the SDN may include a network adopting related transport technology such as Ethernet, MPLS, MPLS-TP, OTN, WDM, etc. and may also include a transport network adopting similar layer network transport technology. The network failure information may include link failure information. The link failure information may be alarm information about a link failure, and also may be notification information about the link failure etc., but it is not limited thereto. The link failure may be a single failure, for example, there is only one link failure in the network, or multiple failures, for example, there are multiple link failures in the network. It should be noted that the link failure may be caused by an interruption of the link itself or a power failure of the forwarder, but it is not limited thereto.

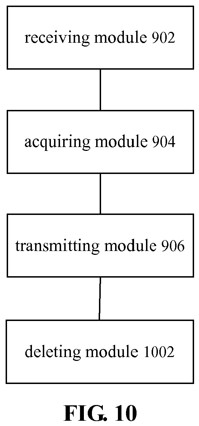

FIG. 10 is another structural diagram of a failure recovery device according to an embodiment of the present disclosure, as shown in FIG. 10, the device also includes:
a deleting module 1002 configured to connect to the transmitting module 906 and to delete the traffic path affected by the network failure.

It should be noted that the deleting module 1002 may also be configured to connect to the acquiring module 904, but it is not limited thereto.

Through deleting the traffic path affected by the network failure via the deleting module 1002, the number of the traffic path may be decreased and the reserved path information which needs to be saved in the controller may be decreased, thereby the storage space may be saved.

It should be noted that the above-mentioned device may not include the deleting module 1002, but may include a retain module configured to retain the traffic path affected by the network failure, it is determined whether to include the deleting module 1002 or to include the retain module according to the actual requirement of a user. Of course, the above-mentioned device may include both the deleting module 1002 and the retain module, but it is not limited thereto.

Since the retain module can retain the traffic path affected by the network failure, when the device including the retain module is used and the traffic path affected by the network failure is an optimal traffic path, the optimal traffic path retained by the retain module instead of the reserved traffic path of the traffic path may be used again after the network failure is eliminated.

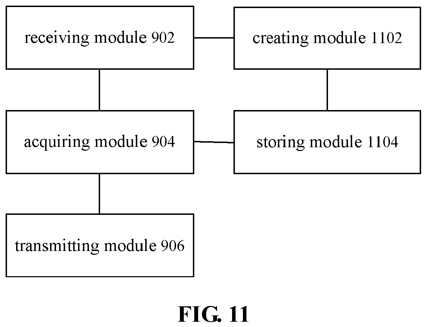

FIG. 11 is yet another structural diagram of a failure recovery device according to an embodiment of the present disclosure, as shown in FIG. 11, the device also includes:
a creating module 1102 configured to connected to the above receiving module 902 and to create a reserved traffic path corresponding to a newly-added traffic path when the newly-added traffic path is detected, herein the newly-added traffic path is a reserved traffic path of a traffic path affected by the network failure;
a storing module 1104 configured to connect to the above creating module 1102 and to store the forwarding table entry of each forwarder required by a forwarding flow line of a reserved traffic path corresponding to the newly-added traffic path in the controller.

Through the creating module1102 and the storing module1104, the forwarding table entry information in the controller can be maintained dramatically by adding the forwarding table entry of each forwarder in the reserved traffic path corresponding to a newly-added traffic path into the controller when the newly-added traffic path is detected, so that the traffic can be recovered quickly after the newly-added traffic path fails.

For example, in an SDN which includes forwarders A, B, C and D and a controller, the current link includes A-B, A-C, A-D, B-C, B-D, C-D, when the link A-B whose reserved traffic path is A-C-B fails, the acquiring module 1004 may retrieve forwarding table entry information of A, C and B corresponding to A-C-B in the controller. At this time, there is a newly-added traffic path A-C-B, then the creating module 1202 need to create a reserved traffic path of A-C-B (assuming A-D-C-B ) in the controller and store the link A-D-C-B and the forwarding table entry of A, D, C, B corresponding to A-D-C-B in the controller, so that the traffic can be recovered quickly when the next failure occurs (such as A-C fails or both of A-C and A-B fail).

It should be noted that above-mentioned modules may be implemented by means of software or hardware. For the latter, that above-mentioned modules may be implemented in a manner that the above-mentioned modules are all located in a same processor or the above-mentioned modules are respectively located in multiple processor, but it is not limited thereto.

For a better understanding of the present disclosure, the present disclosure will be further explained below in conjunction with preferred embodiments

In an embodiment of the present disclosure, by introducing a recovery management component and a table entry repository component based on the current architecture of a controller and proposing a method for recovering the function quickly, the problem that the recovery time is longer in the related art is addressed to satisfy the requirement of the network adopting the transport technology including Ethernet, MPLS, MPLS-TP, OTN, WDM etc.

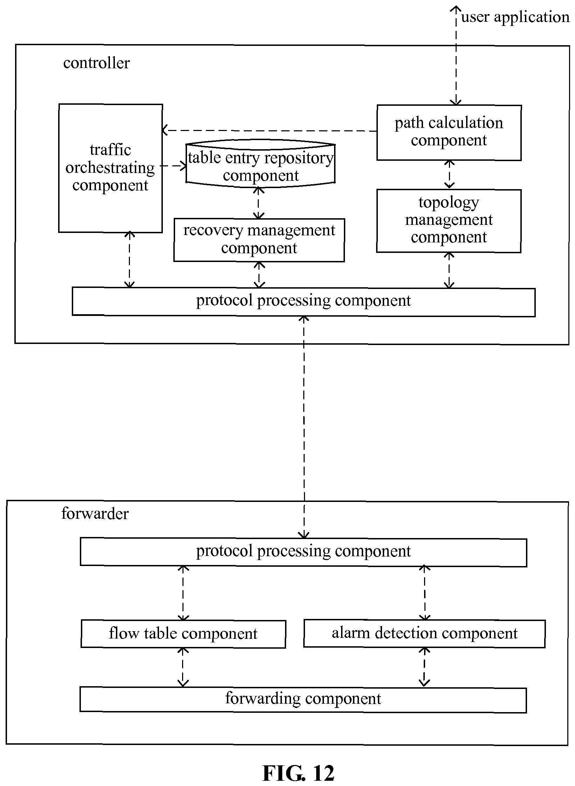

FIG. 12 is an architecture diagram of an SDN according to an embodiment of the present disclosure, as shown in FIG 12, the SDN includes a controller and a forwarder, herein the controller includes a protocol processing component, a topology management component, a path management component, a traffic orchestrating component, a new introduced table entry repository component and a new introduced recovery management component. The forwarder also includes a protocol processing component, an alarm detection component, a forwarding component and a flow table component. The function of each foregoing component in the controller is as same as that of each corresponding component in embodiments shown in FIG. 5 to 7. The core content of this embodiment is that, after a network fails, the protocol processing component rapidly transmits a failure information to the recovery management component and the recovery management component retrieves the table entry repository component according to the failure information and quickly transmit the configuration information used to creating the recovery path downwardly through the protocol processing component, which has the advantages of high speed and good recovery effect.

A quick recovery function is implemented for the SDN transport network which includes a controller and multiple forwarder, therefore, the method for quickly recovering the function in an embodiment of the present disclosure includes:
At Operation 1, the alarm detection component of the forwarder detects whether or not related elements is faulty according to the current SDN recourse and the traffic path configuration. If yes, failure information is transmitted upwardly to the controller through the protocol processing component of the forwarder and the flow proceeds to the next operation. Otherwise, Operation 1 is performed again.
At Operation 2, after receiving the failure information (corresponding to Operation S302 of the embodiment shown in FIG. 1), the protocol processing component of the controller transmit it to the recovery management component and the topology management component; the flow proceeds to the next operation.
At Operation 3, the recovery management component of the controller retrieves the table entry repository component according to the failure information (corresponding to S204 of the embodiment shown in FIG. 1). If the desired information is retrieved, the retrieved information is transmitted downwardly to the forwarder through the protocol processing component (corresponding to S206 of the embodiment shown in FIG. 1), the flow proceeds to Operation 1. If the desired information is not retrieved, Operation 3 is performed again.

The related element in the above-mentioned Operation 1 may include a unit that affects the normal transport of the traffic, such as a physical link interrupts, a label switching path detection fails, etc. When the recovery management component in Operation 2 retrieved the desired information and performs an operation of recovering traffic or after the recovery management component performs the operation of recovering traffic, the path management component may also trigger an operation of deleting the original traffic path affected by the failure. The alarm described in Operation 2 is transmitted to the topology management component and will trigger the update of information stored in the table entry repository component, i.e., the maintenance of the validity of information stored in the table entry repository component as described below.

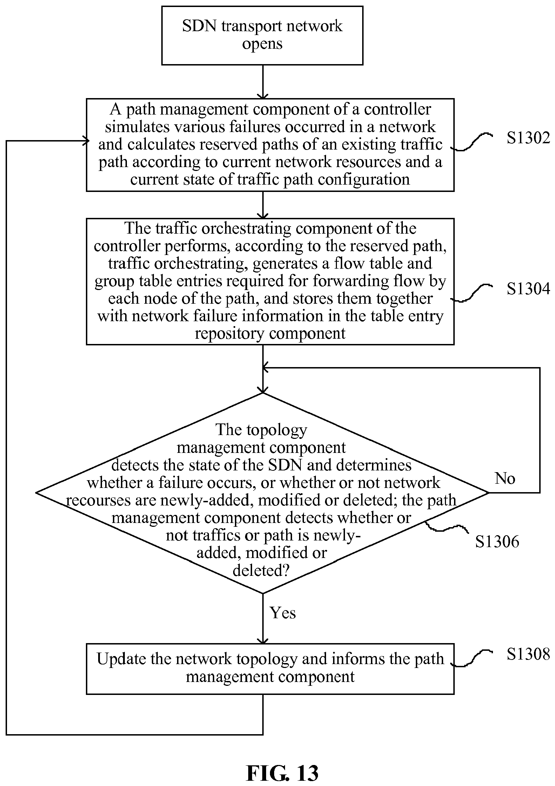

FIG. 13 is a schematic flowchart of a method for maintaining the validity of information stored in a table entry repository component according to an embodiment of the present disclosure, as shown in FIG. 13, the method for maintaining the validity of the information stored in the table entry repository component mainly includes following operations:
At S1302, the path management component of a controller simulates various failures occurred in the network and calculates reserved paths (corresponding to the reserved traffic path in above-mentioned embodiments) for the traffic path affected by the failure according to the current SDN recourse and the traffic path configuration.
At S1304, the traffic orchestrating component performs traffic orchestrating for the reserved path outputted from the path management component of the controller, i.e., generates required information including the flow table, the group table entry etc. (corresponding to the failure recovery information of the embodiment as shown in FIG. 1) according to the forwarding flow of a device at each node of a path.
At S1306, the topology management component of the controller detects whether or not the SDN is faulty, whether or not the network recourse is newly-added, modified or deleted. Or the path management component detects whether or not traffics or paths is newly-added, modified or deleted. If yes, S1308 is performed. Otherwise, S1306 is performed again.
At S1308, the current network topology and the state of the recourse are updated, the flow proceeds to S1302.

It should be noted that the above-mentioned failure or failure information includes scenarios such as single failure (any time, the network has only one failure, such as a single link is interrupted), multiple failures (the network has multiple failures at the same time or in succession, such as multiple links are interrupted, or a node is powered off, etc.), etc.

The above-mentioned method applies to an SDN, including the network adapting current transport technology including Ethernet, MPLS, MPLS-TP, OTN, WDM, etc. and also including the transport network adapting similar layer network transport technology.

The technical solution in an embodiment of the present disclosure quickly retrieves information of the reserved path and transmits it downwardly to the forwarder to recover the traffic according to the network failure transmitted upwardly via the forwarder by introducing the recovery management component, the table entry repository component and the interaction interface between them and the original component in the controller, the technical solution is fast, concise, and reliable.

In order to accelerate the recovery efficiency of the SDN traffic path, an embodiment of the present disclosure proposes another method with quick recovery function based on the SDN architecture. The core of the preferred embodiment is that the controller of the SDN introduces the table entry repository component and the recovery management component, and interfaces between them and components, the controller simulates failures and calculates the reserved path (or recovery path) of the traffic path in advance and saves information of the reserved path in the table entry repository component; when the failure occurs, the recovery management component quickly retrieves the table entry repository component and transmit the forwarding information downwardly to the forwarder to recover the traffic.

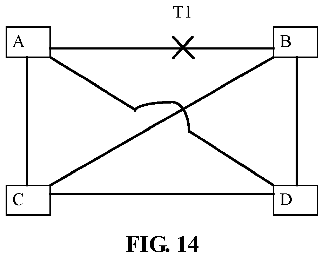

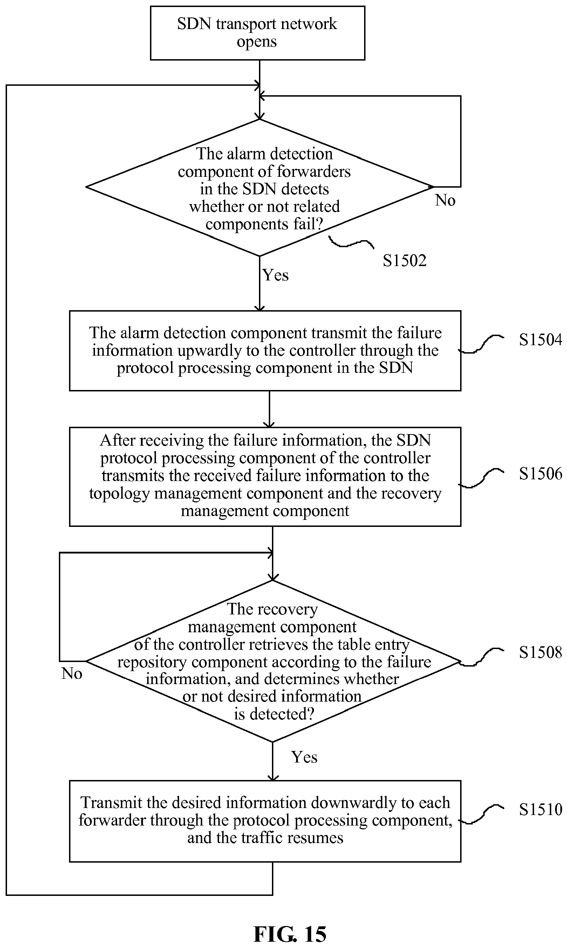

FIG. 14 is a schematic diagram of a failure recovery scenario according to an embodiment of the present disclosure. The implementation of the quick recovery according to an embodiment of the present disclosure is described by taking the failure recovery scenario described in FIG. 14 as an example, specially, the SDN deployments a controller and four SDN forwarders A, B, C, and D; the bidirectional traffic between device A and B has been opened; the transport path is A--B, and the optical fiber is interrupted in the direction of link A<-B at the time T1. FIG. 15 is a flowchart of performing the quick recovery based on the network failure according to an embodiment of the present disclosure.

With reference to the architecture of the SDN in FIG. 12, the failure recovery scenario in FIG. 14 and the implementation of the quick recovery in FIG. 15, the implementation of the quick recovery according to an embodiment of the present invention includes the following operations:
At S1502, the alarm detection component of forwarders A, B, C and D detects whether or not the local related component is faulty according to the current SDN recourse and the traffic path configuration. If yes, the S1504 is performed. Otherwise, S1602 is performed again.
At S1504, the optical fiber in the direction of link A<-B is interrupted at the time T1. The alarm detection component of A detects that the link is faulty and transmits the alarm about the failure of the link A--B upwardly to the controller through the protocol processing component. The alarm detection component of A, B, C and D continue to detect the alarm of the local related element on line.
At S1506, the protocol processing component of the controller receives the alarm about the failure of link A--B transmitted upwardly from A (corresponding to S202 in the embodiment as shown in FIG. 2) and transmit it to the recovery management component and the topology management component.
At S1508, the recovery management component of the controller retrieves the table entry repository component according to the alarm information about the failure of the link A- -B (corresponding to S204 in the embodiment as shown in FIG. 2). If the desired information, i.e. the forwarding table entry information of A, C and B corresponding to the recovery path A--C-B, is retrieved, S1510 is performed. If there is no the recovery path information corresponding to the traffic paths A-B in the table entry repository component, for example, the controller has not yet generated the recovery path information and stored it in the table entry repository component (i.e. no desired information is retrieved), the recovery management component continues to retrieve.
At S1510, information of A, C and B is transmitted downwardly to forwarders of A, C and B, respectively (corresponding to S206 in the embodiment as shown in FIG. 2), then the traffic is recovered and the flow turns to S1502.
At S1508, when the recovery management component performs an operation for recovering traffic or after the recovery management component performs the operation for recovering traffic, the path management component may delete the original traffic path A-B affected by the failure.

In conjunction with the architecture of the SDN in FIG. 12, the failure recovery scenario in FIG. 14, and the method for maintaining the validity of information stored in the table entry repository component in FIG. 13, the implementation for maintaining the validity of information stored in the table entry repository component according to an embodiment of the present invention is illustrated by taking the following for example: the SDN is used to deploy the controller and four SDN forwarders A, B, C and D, the bidirectional traffic between devices A and B has been opened, the transport path is A--B, and the optical fiber in the direction of link A<-B is interrupted at time T1.

The above implementation includes the following operations:
At Operation 1, the alarm detection component detects whether the local related element is faulty according to current SDN resources which including links A-B, A-C, A-D, B-C, B-D and C-D, four forwarders A, B, C, D and the traffic paths A-B. The path management component of the controller simulates that when each links in the network fails or each node fails, a traffic path affected by the failure is found, and a reserved path (equivalent to the above-mentioned reserved traffic path) is calculated. When the link A-B fails, the bidirectional traffic of the path A-B may be affected by the failure and the calculated reserved path is A-C-B.
At Operation 2: forwarding table entry of A, C and B such as the flow table and the group table information of each level is generated based on the forwarding flow requirements of the affected forwarder in the path A-B which is outputted from the path management component of the controller when the link A-B fails. The information is stored together with the failure information of the link A-B in the table entry repository component, to quickly retrieve the forwarding information of the related reserved path according to the failure.
At Operation 3: The topology management component of the controller detects that the link A-B fails at time Tland the path management component detected the newly-added traffic path A-C-B. The topology management component updates the resource information of the SDN, including links A-C, A-D, B-C, B-D, and C-D, four forwarders A, B, C, and D and traffic paths A-C-B, A-B. Operation 1 of the implementation is performed.

In particular, after above Operation 3 is performed, a new reserved path of A-C-B (such as A-D-C-B) is created, and the traffic can be quickly resumed again when the next failure occurs (for example, the link A-C is interrupted). This is an application of the embodiment of the present invention for multiple failures (both of links A-B, A-C fail), although it is not described in the above Operations 1, 2, 3.

Specifically, in above-mentioned Operation 3, if the operation of deleting the failure path A-B which described in the quick recovery scheme is performed, the resource information of the SDN which is updated by the topology management component in Operation 3 no longer includes the traffic path A-B.

It should be noted that the function of the protocol processing component, the table entry repository component, the recovery management component, the topology management component, the path management component and the traffic composition component of the controller in the above embodiment is similar to that of the protocol processing component, the table entry repository component, the recovery management component, the topology management component, the path management component and the traffic composition component of the controller in FIGS. 6 to 8 .

An embodiment of the present invention also provides a storage medium. Optionally, in the embodiment, the above storage medium may be configured to store program code for executing the following operations:
At S1: network failure information transmitted by a forwarder is received;
At S2: failure recovery information corresponding to the network failure information and pre-stored in a controller is acquired according to the network failure information, herein the failure recovery information is configured to perform recovery on a network failure corresponding to the network failure information;
At S3: the failure recovery information is transmitted to each forwarder corresponding to the failure recovery information.

Optionally, in the embodiment, the above storage medium may include, but is not limited to, a variety of medium that can store program code such as a U disk, a Read-Only Memory (ROM), a Random Access Memory (RAM), a removable hard disk, an optical disc etc.

Optionally, specific examples in the embodiments may reference to the examples described in the foregoing embodiments and optional embodiments, which are not described herein again.

Obviously, those skilled in the art should understand that each module or steps of the present disclosure described above may be implemented by a general-purpose computing device which can be integrated on a single computing device or distributed over a network of multiple computing devices. Alternatively, they may be embodied in program code that is executable by the computing device so that they may be stored in a storage device so as to be executed by a computing device. And in some cases, the illustrated or described steps may be performed in a different order than the described order, or may be implemented by separately fabricating them into individual integrated circuit modules, or by fabricating multiple modules or steps of them into a single integrated circuit module. Thus, the present disclosure is not limited to any specific combination of hardware and software.

### INDUSTRIAL APPLICABILITY

The present invention discloses a failure recovery method and a device, a controller and a software defined network, and at least the problem that an SDN takes a long time to recover from a failure in the related art is addressed. Wherein, the failure recovery method applied to the SDN and includes: receiving network failure information transmitted by a forwarder, acquiring , according to the network failure information, failure recovery information corresponding to the network failure information and pre-stored in a controller, herein the failure recovery information is configured to perform recovery on a network failure corresponding to the network failure information, and transmitting the failure recovery information to each forwarder corresponding to the failure recovery information.

Through the embodiments of the present disclosure, the recovery time is shortened and the recovery efficiency is improved.

## Claims

1. A failure recovery method, applied to a Software Defined Network, SDN, comprising:
receiving (S202) network failure information transmitted by a forwarder, wherein the forwarder comprises a flow table component, a fault detection component, a forwarding component and a protocol adaptation component;
acquiring (S204), according to the network failure information, failure recovery information corresponding to the network failure information and pre-stored in a controller, wherein the failure recovery information is configured to perform recovery on a network failure corresponding to the network failure information; and
transmitting (S206) the failure recovery information to each forwarder corresponding to the failure recovery information,
wherein after receiving the network failure information transmitted by the forwarder, the failure recovery method further comprises:
creating (S402) a reserved traffic path corresponding to a newly-added traffic path when the newly-added traffic path is detected, wherein the newly-added traffic path is a reserved traffic path of an original traffic path affected by the network failure; and
pre-storing (S404), in the controller, the failure recovery information which includes a forwarding table entry of each forwarder corresponding to the created reserved traffic path.

2. The method according to claim 1, wherein the network failure information comprises link failure information.

3. The method according to claim 1, further comprising: after transmitting the failure recovery information to each forwarder corresponding to the failure recovery information,
deleting (S302) the original traffic path affected by the network failure.

4. A failure recovery device, applied to a Software Defined Network, SDN, comprising:
a receiving module (902) configured to receive network failure information transmitted by a forwarder, wherein the forwarder comprises a flow table component, a fault detection component, a forwarding component and a protocol adaptation component;
an acquiring module (904) configured to acquire, according to the network failure information, failure recovery information corresponding to the network failure information and pre-stored in a controller, wherein the failure recovery information is configured to perform recovery on a network failure corresponding to the network failure information;
a transmitting module (906) configured to transmit the failure recovery information to each forwarder corresponding to the failure recovery information;
a creating module (1102) configured to create a reserved traffic path corresponding to a newly-added traffic path when the newly-added traffic path is detected, wherein the newly-added traffic path is a reserved traffic path of an original traffic path affected by the network failure; and
a storing module (1104) configured to pre-store, in the controller, the failure recovery information which includes a forwarding table entry of each forwarder corresponding to the created reserved traffic path.

5. The device according to claim 4, wherein the network failure information comprises link failure information.

6. The device according to claim 4, further comprising:
a deleting module (1002) configured to delete the original traffic path affected by the network failure.

7. A storage medium configured to store program codes for performing operations of:
receiving network failure information transmitted by a forwarder, wherein the forwarder comprises a flow table component, a fault detection component, a forwarding component and a protocol adaptation component;
acquiring, according to the network failure information, failure recovery information corresponding to the network failure information and pre-stored in a controller, wherein the failure recovery information is configured to perform recovery on a network failure corresponding to the network failure information; and
transmitting the failure recovery information to each forwarder corresponding to the failure recovery information,
after receiving the network failure information transmitted by the forwarder,
creating a reserved traffic path corresponding to a newly-added traffic path when the newly-added traffic path is detected, wherein the newly-added traffic path is a reserved traffic path of an original traffic path affected by the network failure; and
pre-storing, in the controller, the failure recovery information which includes a forwarding table entry of each forwarder corresponding to the created reserved traffic path.

## Patentansprüche

1. Ausfallwiederherstellungsverfahren, angewandt auf ein softwaredefiniertes Netzwerk (SDN), umfassend:
Empfangen (S202) von Netzwerkausfallinformationen, die von einem Forwarder übermittelt werden, wobei der Forwarder eine Flusstabellenkomponente, eine Fehlererfassungskomponente, eine Weiterleitungskomponente und eine Protokollanpassungskomponente umfasst;
Erfassen (S204), gemäß den Netzwerkausfallinformationen, von Ausfallwiederherstellungsinformationen, die den Netzwerkausfallinformationen entsprechen und in einer Steuereinheit vorgespeichert sind, wobei die Ausfallwiederherstellungsinformationen so konfiguriert sind, dass sie eine Wiederherstellung bei einem Netzwerkausfall, der den Netzwerkausfallinformationen entspricht, durchführen; und
Übermitteln (S206) der Ausfallwiederherstellungsinformationen an jeden Forwarder, der den Ausfallwiederherstellungsinformationen entspricht,
wobei das Ausfallwiederherstellungsverfahren nach dem Empfangen der vom Forwarder übermittelten Netzwerkausfallinformationen weiterhin umfasst:
Erzeugen (S402) eines reservierten Verkehrspfades, der einem neu hinzugefügten Verkehrspfad entspricht, wenn der neu hinzugefügte Verkehrspfad erfasst wird, wobei der neu hinzugefügte Verkehrspfad ein reservierter Verkehrspfad eines ursprünglichen Verkehrspfades ist, der von dem Netzwerkausfall betroffen ist; und
Vorspeichern (S404), in der Steuereinheit, der Ausfallwiederherstellungsinformationen, die einen Weiterleitungstabelleneintrag jedes Forwarders enthalten, der dem erstellten reservierten Verkehrspfad entspricht.

2. Verfahren nach Anspruch 1, wobei die Netzwerkausfallinformationen Verbindungsausfallinformationen umfassen.

3. Verfahren nach Anspruch 1, ferner umfassend: nach dem Übermitteln der Ausfallwiederherstellungsinformationen an jeden Forwarder, der den Ausfallwiederherstellungsinformationen entspricht,
Löschen (S302) des ursprünglichen, vom Netzwerkausfall betroffenen Verkehrspfades.

4. Ausfallwiederherstellungsvorrichtung, die auf ein softwaredefiniertes Netzwerk (SDN) angewandt wird, umfassend:
ein Empfangsmodul (902), das so konfiguriert ist, dass es von einem Forwarder übermittelte Netzwerkausfallinformationen empfängt, wobei der Forwarder eine Flusstabellenkomponente, eine Fehlererfassungskomponente, eine Weiterleitungskomponente und eine Protokollanpassungskomponente umfasst;
ein Erfassungsmodul (904), das so konfiguriert ist, dass es in Übereinstimmung mit den Netzwerkausfallinformationen Ausfallwiederherstellungsinformationen erfasst, die den Netzwerkausfallinformationen entsprechen und in einer Steuereinheit vorgespeichert sind, wobei die Ausfallwiederherstellungsinformationen so konfiguriert sind, dass sie eine Wiederherstellung bei einem Netzwerkausfall entsprechend den Netzwerkausfallinformationen durchführen;
ein Übermittlungsmodul (906), das so konfiguriert ist, dass es die Ausfallwiederherstellungsinformationen an jeden Forwarder überträgt, der den Ausfallwiederherstellungsinformationen entspricht;
ein Erzeugungsmodul (1102), das so konfiguriert ist, dass es einen reservierten Verkehrspfad erzeugt, der einem neu hinzugefügten Verkehrspfad entspricht, wenn der neu hinzugefügte Verkehrspfad erfasst wird, wobei der neu hinzugefügte Verkehrspfad ein reservierter Verkehrspfad eines ursprünglichen Verkehrspfads ist, der von dem Netzwerkausfall betroffen ist; und
ein Speichermodul (1104), das so konfiguriert ist, dass es in der Steuereinheit die Ausfallwiederherstellungsinformationen vorspeichert, die einen Weiterleitungstabelleneintrag jedes Forwarders enthalten, der dem erstellten reservierten Verkehrspfad entspricht.

5. Vorrichtung nach Anspruch 4, wobei die Netzwerkausfallinformationen Verbindungsausfallinformationen umfassen.

6. Vorrichtung nach Anspruch 4, ferner umfassend:
ein Löschmodul (1002), das so konfiguriert ist, dass es den ursprünglichen Verkehrspfad, der von dem Netzwerkausfall betroffen ist, löscht.

7. Speichermedium, das so konfiguriert ist, dass es Programmcodes zur Durchführung folgender Operationen speichern kann:
Empfangen von Netzwerkausfallinformationen, die von einem Forwarder übermittelt werden, wobei der Forwarder eine Flusstabellenkomponente, eine Fehlererfassungskomponente, eine Weiterleitungskomponente und eine Protokollanpassungskomponente umfasst;
Erfassen, gemäß den Netzwerkausfallinformationen, von Ausfallwiederherstellungsinformationen, die den Netzwerkausfallinformationen entsprechen und in einer Steuereinheit vorgespeichert sind, wobei die Ausfallwiederherstellungsinformationen so konfiguriert sind, dass sie eine Wiederherstellung bei einem Netzwerkausfall, der den Netzwerkausfallinformationen entspricht, durchführen; und
Übermitteln der Ausfallwiederherstellungsinformationen an jeden Forwarder, der den Ausfallwiederherstellungsinformationen entspricht,
nach Empfang der vom Forwarder übermittelten Netzwerkausfallinformationen ,
Erzeugen eines reservierten Verkehrspfades, der einem neu hinzugefügten Verkehrspfad entspricht, wenn der neu hinzugefügte Verkehrspfad erfasst wird, wobei der neu hinzugefügte Verkehrspfad ein reservierter Verkehrspfad eines ursprünglichen Verkehrspfades ist, der von dem Netzwerkausfall betroffen ist; und
Vorspeichern, im Steuergerät, der Ausfallwiederherstellungsinformationen, die einen Weiterleitungstabelleneintrag jedes Forwarders enthalten, der dem erstellten reservierten Verkehrspfad entspricht.

## Revendications

1. Procédé de reprise après défaillance, appliqué à un réseau défini par logiciel, SDN, comprenant:
la réception (S202) d'une information de défaillance de réseau émise par un élément de transfert, dans lequel l'élément de transfert comprend un composant de table de flux, un composant de détection de défaut, un composant de transfert et un composant d'adaptation de protocole;
l'acquisition (S204), selon l'information de défaillance de réseau, d'une information de reprise après défaillance correspondant à l'information de défaillance de réseau et pré-stockée dans un dispositif de commande, dans lequel l'information de reprise après défaillance est configurée pour réaliser une reprise lors d'une défaillance de réseau correspondant à l'information de défaillance de réseau; et
l'émission (S206) de l'information de reprise après défaillance vers chaque élément de transfert correspondant à l'information de reprise après défaillance,
dans lequel après la réception de l'information de défaillance de réseau émise par l'élément de transfert, le procédé de reprise après défaillance comprend en outre:
la création (S402) d'un chemin de trafic réservé correspondant à un chemin de trafic nouvellement ajouté lorsque le chemin de trafic nouvellement ajouté est détecté, dans lequel le chemin de trafic nouvellement ajouté est un chemin de trafic réservé d'un chemin de trafic d'origine affecté par la défaillance de réseau; et
le pré-stockage (S404), dans le dispositif de commande, de l'information de reprise après défaillance qui inclut une entrée de table de transfert de chaque élément de transfert correspondant au chemin de trafic réservé créé.

2. Procédé selon la revendication 1, dans lequel l'information de défaillance de réseau comprend une information de défaillance de liaison.

3. Procédé selon la revendication 1, comprenant en outre : après l'émission de l'information de reprise après défaillance vers chaque élément de transfert correspondant à l'information de reprise après défaillance,
la suppression (S302) du chemin de trafic d'origine affecté par la défaillance de réseau.

4. Dispositif de reprise après défaillance, appliqué à un réseau défini par logiciel, SDN, comprenant:
un module de réception (902) configuré pour recevoir une information de défaillance de réseau émise par un élément de transfert, dans lequel l'élément de transfert comprend un composant de table de flux, un composant de détection de défaut, un composant de transfert et un composant d'adaptation de protocole;
un module d'acquisition (904) configuré pour acquérir, selon l'information de défaillance de réseau, une information de reprise après défaillance correspondant à l'information de défaillance de réseau et pré-stockée dans un dispositif de commande, dans lequel l'information de reprise après défaillance est configurée pour réaliser une reprise lors d'une défaillance de réseau correspondant à l'information de défaillance de réseau;
un module d'émission (906) configuré pour émettre l'information de reprise après défaillance vers chaque élément de transfert correspondant à l'information de reprise après défaillance;
un module de création (1102) configuré pour créer un chemin de trafic réservé correspondant à un chemin de trafic nouvellement ajouté lorsque le chemin de trafic nouvellement ajouté est détecté, dans lequel le chemin de trafic nouvellement ajouté est un chemin de trafic réservé d'un chemin de trafic d'origine affecté par la défaillance de réseau; et
un module de stockage (1104) configuré pour pré-stocker, dans le dispositif de commande, l'information de reprise après défaillance qui inclut une entrée de table de transfert de chaque élément de transfert correspondant au chemin de trafic réservé créé.

5. Dispositif selon la revendication 4, dans lequel l'information de défaillance de réseau comprend une information de défaillance de liaison.

6. Dispositif selon la revendication 4, comprenant en outre:
un module de suppression (1002) configuré pour supprimer le chemin de trafic d'origine affecté par la défaillance de réseau.

7. Support de stockage configuré pour stocker des codes de programme pour la réalisation d'opérations consistant à:
recevoir une information de défaillance de réseau émise par un élément de transfert, dans lequel l'élément de transfert comprend un composant de table de flux, un composant de détection de défaut, un composant de transfert et un composant d'adaptation de protocole;
acquérir, selon l'information de défaillance de réseau, une information de reprise après défaillance correspondant à l'information de défaillance de réseau et pré-stockée dans un dispositif de commande, dans lequel l'information de reprise après défaillance est configurée pour réaliser une reprise lors d'une défaillance de réseau correspondant à l'information de défaillance de réseau; et
émettre l'information de reprise après défaillance vers chaque élément de transfert correspondant à l'information de reprise après défaillance,
après la réception de l'information de défaillance de réseau émise par l'élément de transfert,
créer un chemin de trafic réservé correspondant à un chemin de trafic nouvellement ajouté lorsque le chemin de trafic nouvellement ajouté est détecté, dans lequel le chemin de trafic nouvellement ajouté est un chemin de trafic réservé d'un chemin de trafic d'origine affecté par la défaillance de réseau; et
pré-stocker, dans le dispositif de commande, l'information de reprise après défaillance qui inclut une entrée de table de transfert de chaque élément de transfert correspondant au chemin de trafic réservé créé.
